(19) Europäisches Patentamt

European Patent Office

Office européen des brevets

(11) **EP 4 458 769 A1**

(12) **EUROPÄISCHE PATENTANMELDUNG**

(43) Veröffentlichungstag:
**06.11.2024 Patentblatt 2024/45**

(21) Anmeldenummer: **24173249.4**

(22) Anmeldetag: **30.04.2024**

(51) Internationale Patentklassifikation (IPC):
**C01B 33/193** (2006.01)    **C08K 3/36** (2006.01)
**C09D 7/62** (2018.01)    **C09C 1/30** (2006.01)
**C08K 9/08** (2006.01)    **C09D 7/61** (2018.01)

(52) Gemeinsame Patentklassifikation (CPC):
**C09C 1/30; C01B 33/193; C08K 3/36; C08K 9/08;**
**C09C 1/3018; C09C 1/3072; C09D 7/61;**
**C09D 7/62;** C01P 2004/51; C01P 2004/61;
C01P 2006/11; C01P 2006/12; C01P 2006/14;
C01P 2006/16; C01P 2006/19;    (Forts.)

(84) Benannte Vertragsstaaten:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Benannte Erstreckungsstaaten:
**BA**
Benannte Validierungsstaaten:
**GE KH MA MD TN**

(30) Priorität: **05.05.2023 EP 23171810**

(71) Anmelder: **Evonik Operations GmbH**
**45128 Essen (DE)**

(72) Erfinder:
• **Klotzbach, Thomas**
**63500 Seligenstadt (DE)**
• **Herrwerth, Sascha**
**63579 Freigericht (DE)**

• **Feller, Andreas**
**63834 Sulzbach (DE)**
• **Heeg, Siegfried**
**63768 Hösbach (DE)**
• **Schmeier, Uwe**
**63594 Hasselroth (DE)**
• **Heinzinger, Jan Hendrik**
**63512 Hainburg (DE)**
• **Mißelich, Doris**
**53919 Weilerswist (DE)**

(74) Vertreter: **Evonik Patent Association**
**c/o Evonik Industries AG**
**IP Management**
**Bau 1042A/PB 15**
**Paul-Baumann-Straße 1**
**45772 Marl (DE)**

(54) **MATTIERUNGSMITTEL BASIEREND AUF FÄLLUNGSKIESELSÄUREN**

(57) Die Erfindung betrifft Fällungskieselsäure, gekennzeichnet durch
BET: ISO 9277
150 $m^2$/g - 400 $m^2$/g, bevorzugt 200 $m^2$/g - 300 $m^2$/g, bestimmt nach
DOA:
220 ml/100 g - 400 ml/100 g, bevorzugt 250 ml/100g - 350 ml/100 g, bestimmt nach ISO 19246
$d_{50}$:

3,0 $\mu$m - 5,0 $\mu$m, bestimmt durch Laserbeugung an einer Coulter LS nach ISO 13320,
Partikelgrößenverhältnis $d_5 : d_{50} : d_{95}$:
>0,3 : 1 : <2,
Teilchengrößenverteilung

$$\frac{d_{95} - d_5}{d_{50}}$$ : zwischen 1,3 und 1,7.

EP 4 458 769 A1

(52) Gemeinsame Patentklassifikation (CPC): (Forts.)
C01P 2006/60; C08K 2201/003; C08K 2201/006

**Beschreibung**

Die vorliegende Erfindung betrifft Mattierungsmittel auf Basis von Fällungskieselsäuren, deren Herstellung und deren Verwendung in Farben und Lacken.

Beschichtungen werden auf Oberflächen bzw. Substraten zu dekorativen, funktionellen Zwecken oder zu Schutzzwecken aufgebracht. Sie verschönern, schützen und bewahren Materialien, wie Holz, Metall oder Kunststoff. Die Beschichtungen können hochglänzend oder matt sein.

Früher wurden Beschichtungen, wie Lacke und Druckfarben, nachträglich durch gezielte Aufrauhung der Oberflächen im Mikrobereich mattiert. Das auf die aufgeraute Oberfläche einfallende Licht wird dadurch nicht gerichtet reflektiert, sondern diffus gestreut. Je diffuser das Licht gestreut wird, desto matter erscheint die Oberfläche für das menschliche Auge.

Heutzutage bedient man sich des Einsatzes von Mattierungsmitteln, welches in Lacksysteme eingebracht werden. Mattierungsmittel bestehen üblicherweise aus gefällten oder pyrogenen Kieselsäuren, Kieselgelen, Polymethylharnstoffen oder Wachsen. Dabei werden an ihnen viele Anforderungen gesetzt. Demnach wird auf der einen Seite eine gute Mattierungswirkung gefordert, auf der anderen Seite sollen sie keinen negativen Einfluss auf die Lackfilmoberflächen-Haptik und/oder die Transparenz haben. Zudem sollen sie eine gute Dispergierbarkeit bei der Lackherstellung aufweisen.

Die Lackfilmoberflächen sollen zwar auf verschiedene Stufen der Mattierung von seidenmatt bis stumpfmatt eingestellt werden können, ohne jedoch rau zu wirken. Demnach wird die Rauigkeit matter Oberflächen dabei auch von der Partikelgröße und -form des Mattierungsmittels bestimmt. Bei groben Mattierungsmitteln wirken Lackfilmoberflächen zwar matt, jedoch rau.

Die Mattierungswirkung beruht auf den Effekt durch aus der Oberfläche herausragenden Kieselsäurepartikeln, die bei der Trocknung des Lacksystems eine Mikrostruktur ausbilden. An den so entstehenden Bergen und Tälern werden die Lichtstrahlen in alle Richtungen gestreut. Zur Quantifizierung des Matt- bzw. Glanzgrades hat sich die Messung des reflektierten Lichtanteils bei einem 60°-Winkel etabliert.

Grobe Partikel lassen sich grundsätzlich leichter dispergieren als feinteilige, da bei feinen Partikeln eine viel höhere Oberfläche benetzt werden muss. Zudem neigen feine Partikel aufgrund der hohen Oberflächenenergie deutlich stärker zur Reagglomeration.

Zur Vermeidung bzw. Reduzierung dieser Neigung, was bei der Lackherstellung besonders wichtig ist, wäre es wünschenswert, Mattierungsmittel bereitzustellen, wobei deren Einsatzmenge bei gleichbleibendem Glanzgrad reduziert werden kann, ohne dass die Transparenz, die Dispergierbarkeit und/oder die Haptik negativ beeinflusst werden.

Gegenstand der vorliegenden Erfindung sind daher Fällungskieselsäuren, gekennzeichnet durch die folgenden physikalisch-chemischen Parameter:

| | |
|---|---|
| BET: | 150 m$^2$/g - 400 m$^2$/g, bevorzugt 200 m$^2$/g - 300 m$^2$/g, gemessen nach ISO 9277 |
| DOA: | 220 ml/100 g - 400 ml/100 g, bevorzugt 250 ml/100 g - 350 ml/100 g, bestimmt nach ISO 19246 |
| $d_{50}$: | 3,0 μm - 5,0 μm, bestimmt durch Laserbeugung an einer Coulter LS nach ISO 13320, |
| Partikelgrößenverhältnis $d_5$ : | $d_{50} : d_{95}$: >0,3 : 1 : <2, |
| Teilchengrößenverteilung | $\dfrac{d_{95} - d_5}{d_{50}}$:     zwischen 1,3 und 1,7. |

Eine mittlere Partikelgröße der erfindungsgemäßen Fällungskieselsäure kann nach ISO13320:2009 durch Laserbeugungs-Partikelgrößenanalyse bestimmt werden. Dabei wird aus der resultierenden gemessenen Partikelgrößenverteilung der Mittelwert $d_{50}$, der wiedergibt, welche Partikelgröße 50% aller Partikeln nicht übersteigt, als mittlere Partikelgröße definiert.

Die spezifische Oberfläche, auch vereinfacht BET Oberfläche genannt, wird nach DIN 9277:2014 durch Stickstoffadsorption nach dem Brunauer-Emmett-Teller-Verfahren bestimmt.

Die Bestimmung der DOA-Absorptionszahl erfolgt mittels eines Absorptometers, das mit einem Drehmomentmess- und Verarbeitungssystem ausgestattet ist. Es kann zur Beurteilung des Flüssigkeitsaufnahmevermögens von Siliciumdioxid, Calciumsilicaten und Natriumaluminosilicaten verwendet werden. Der Wert der DOA-Absorptionszahl gibt einen Hinweis auf die Trägereigenschaft eines Füllstoffs.

Erfahrungsgemäß wird eine höhere Menge an Fällungskieselsäure mit kleineren Partikelgrößen benötigt als bei Fällungskieselsäuren mit größeren Partikelgrößen zur Erreichung desselbigen Glanzgrades.

Unerwartet konnte festgestellt werden, dass die Einsatzmenge der erfindungsgemäßen Fällungskieselsäure reduziert werden konnte im Vergleich zu einem handelsüblichen feinteiligen Mattierungsmittel. Beispielsweise konnte über einen breiten Glanzgradbereich, gemessen im 60°-Winkel, die Einsatzmenge in verschiedenen Lacksystemen reduziert werden. Es sei hier auf die Beispiele verwiesen.

Die reduzierte Einsatzmenge der erfindungsgemäßen Fällungskieselsäure stellt im Hinblick auf die Effizienz (Wirtschaftlichkeit) auch eine wichtige Produkteigenschaft dar. Je effizienter eine Kieselsäure ist, desto weniger muss im entsprechenden Lacksystem zum Erreichen eines definierten Glanzgrades eingesetzt werden.

Zudem konnte festgestellt werden, dass die Transparenz von Klarlacken erhöht werden konnte. Die Density Dy (Transparenz) der mattierten Klarlacke wurde mit einem eXact Densiometer der Fa. X-Rite, angelehnt an der DIN 55988, gemessen. Die mattierten Klarlacke der verschiedenen Lacksysteme wurden dabei auf schwarze PMMA-Platten aufgezogen, wobei für den Vergleich der verschiedenen Mattierungsmittel die Glanzgrade immer auf den jeweils betrachteten gleichen Glanzwert, gemessen bei 60°, eingestellt wurden. Die Transparenz wird dann über die diffuse Reflektion in einem Winkel von 45° über eine logarithmische Berechnung ermittelt. Die Parameter für die Messung wurden wie folgt vorgenommen:

| Parameter | Einstellungen |
|---|---|
| Measuring conditions | M0 (no): no filter |
| Density Status | ISO Status E |
| Density White Base | Absolute |
| All Densities | CMYK |
| Density /Tone Value | Solid: CMYK |
| Density /Tone Value | Tint: Tone Value |
| Tone Value / Spot | SCTV (ISO20654) |
| Illuminant/Observer | D65/2°/10° |

Dabei ist zu beachten, dass die Transparenzen der mattierten Klarlacksysteme nur bei gleichem Glanzgrad miteinander verglichen werden können. Ein Vergleich bei gleicher Dosierung der Kieselsäure ist unzulässig. Der gemessene Transparenzwert Dy ist ein logarithmischer Zahlenwert. Je höher also der Dy-Wert, desto transparenter ist der mattierte Klarlack.

Vorzugsweise ist der Median Porendurchmesser der erfindungsgemäßen Fällungskieselsäure, kleiner als 7,0 $\mu$m, bevorzugt kleiner als 5,0 $\mu$m und besonders bevorzugt kleiner als 3,0 $\mu$m, gemessen mit einem Autopore IV 9520 nach ISO 15901-1, mit folgenden Geräte-Einstellungen: Kontaktwinkel von 140° und Druckbereich von 0,003 - 420 MPa und bestimmt im Porendurchmesserbereich von 3,5 nm - 500 $\mu$m, nach der Vermahlung der Kieselsäure bestimmt.

Die erfindungsgemäße Kieselsäure weist vorzugsweise eine einzigartige Morphologie auf, insbesondere deren Porosität, die mittels der Quecksilberporosimetrie verdeutlicht werden kann.

Bevorzugt weist die erfindungsgemäße Fällungskieselsäure ein Porenvolumen von 2,20 ml/g Hg (d = 0,1 $\mu$m - d = 3,0 $\mu$m) - 2,90 ml/g Hg (d = 0,1 $\mu$m - d = 3,0 $\mu$m), bestimmt mittels des Hg-Porosimeters, auf.

Bevorzugt weist die erfindungsgemäße Fällungskieselsäure ein Porenvolumen von 2,40 ml/g Hg (d = 0,1 $\mu$m - d = 4,0 $\mu$m) - 3,10 ml/g Hg (d = 0,1 $\mu$m - d = 4,0 $\mu$m), bestimmt mittels des Hg-Porosimeters, auf.

Bevorzugt weist die erfindungsgemäße Fällungskieselsäure ein Porenvolumen von 2,50 ml/g Hg (d = 0,1 $\mu$m - d = 5,0 $\mu$m) - 3,30 ml/g Hg (d = 0,1 $\mu$m - d = 5,0 $\mu$m), bestimmt mittels des Hg-Porosimeters, auf.

Die Bestimmung des Hg-Porendurchmessers (d < 4 $\mu$m bzw. d < 5 $\mu$m) basiert auf der Quecksilber-Instrusion gemäß DIN 66133, wobei ein AutoPore V 9600 Vorrichtung der Firma Micomeritics verwendet wird. Das Verfahrensprinzip beruht auf der Messung des in einen porösen Feststoff eingepressten Quecksilbervolumens in Abhängigkeit von dem angewendeten Druck.

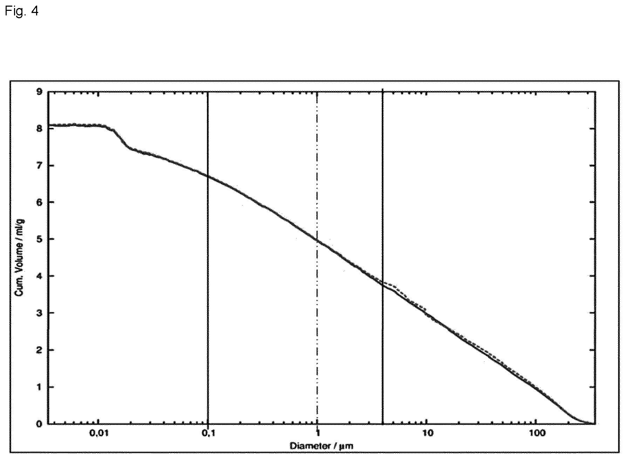

Fig. 4 zeigt eine Grafik einer Porenvolumenbestimmung mittels der Hg-Porosimeters. Sie illustriert beispielsweise die einzigartige Morphologie der erfindungsgemäßen Kieselsäure K2. Die senkrecht durchgezogenen Linien bei d = 0,1 $\mu$m) und d = 4,0 $\mu$m stellen einen für die Erfindung gesetzten Bereich dar. Die Differenz der kumulierten Porenvolumina (ml/g) stellt das Porenvolumen für diesen Bereich dar (siehe Tabelle C). Für die Berechnung werden jeweils die Schnittpunkte der jeweiligen senkrecht durchgezogenen Linien mit dem Graphen abgelesen und berechnet.

Darüber hinaus ist der Grafik zu entnehmen, dass bei einem Bereich bis zu einem Porendurchmesser von d < 1 $\mu$m das kumulierte Porenvolumen 4,9 ml/g beträgt. Hierfür wird eine senkrechte gestrichelte Linie bei d = 1 $\mu$m gesetzt. Der Wert am Schnittpunkt mit dem Graphen kann abgelesen werden. Bei einem Porenvolumen kleiner als 4,9 ml/g würde der Graphen einen flacheren Verlauf haben und daraus resultierend würden die Kieselsäurepartikel weniger Porenvolumen aufweisen.

Die erfindungsgemäßen Kieselsäuren weisen einen sehr viel kleineren mittleren Porendurchmesser auf, als vergleichbare handelsüblichen Kieselsäuren, die als Mattierungsmittel eingesetzt werden. Trotz der viel kleineren Porendurchmesser wurde festgestellt, dass sie mehr Quecksilber absorbieren können. Die höhere Anzahl von durchschnittlich kleineren Poren bringt bei der Transparenz, insbesondere bei Wasserlacksystemen, einen entscheidenden Vorteil.

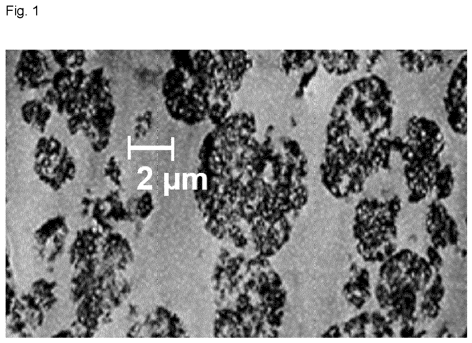

Fig. 1 zeigt eine REM-Aufnahme einer Klarlackbeschichtung im Querschnitt, in der die Kieselsäurepartikel eingebunden sind. Aufgrund der Morphologie bzw. der Porosität der Kieselsäuren verhalten sie sich wie ein Schwamm und sind durchgängig mit dem transparenten Bindemittel gefüllt. Da das Bindemittel und Kieselsäure einen ähnlichen Brechungsindex besitzen, bleibt der mattierte Klarlack nach der Trocknung noch weitestgehend transparent.

Wässrige Bindemittel sind Dispersion von Polymerpartikeln in einer wässrigen Phase. Der Durchmesser der kugelförmigen Polymerpartikel kann zwischen einigen 10 Nanometern und wenigen Mikrometern liegen. Beim Trocknen des Lackfilms verdunsten Wasser und ggf. Co-Löser, wodurch sich das Volumen verringert und die Dispersion zu koagulieren beginnt. Dabei kommen sich die Dispersionsteilchen immer näher und beginnen schließlich zu verschmelzen was man als Koaleszenz bezeichnet. Am Ende der Koaleszenz bildet sich ein homogener Bindemittelfilm, bei dem die Teilchengrenzen des Bindemittels verschwunden sind. Die Bindemittelteilchen können gut in die vielen Poren eindringen und in den Poren verfilmen. Je mehr Poren vorliegen, desto mehr verschwimmen die Unterschiede im Brechungsindex zwischen Kieselsäure und Bindemittel, was zu einer verbesserten Transparenz führt, was bei den erfindungsgemäßen Kieselsäuren in den entsprechenden Bindemittelsystemen festgestellt wurde.

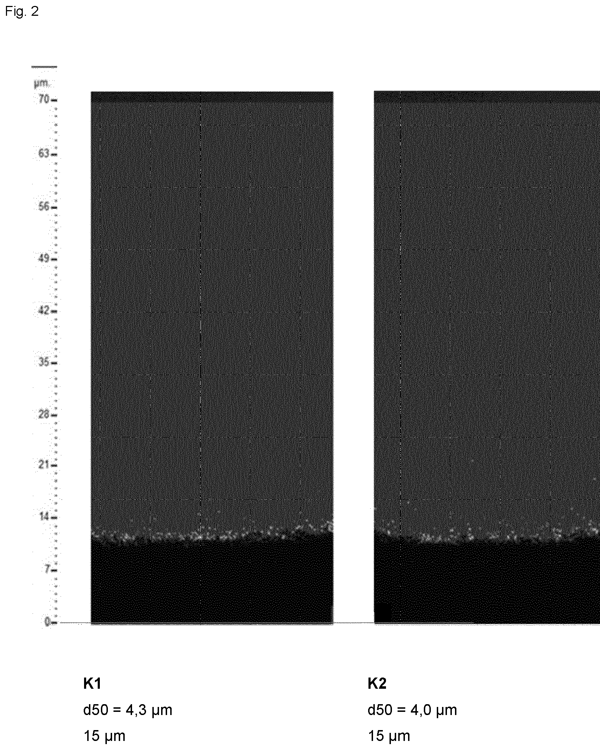

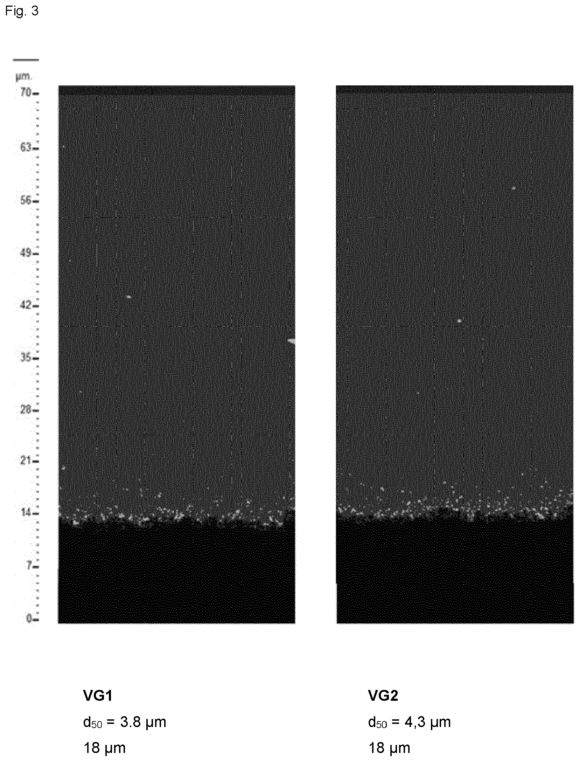

Die Dispergierbarkeit der erfindungsgemäßen Fällungskieselsäure in verschiedenen Lacksystemen konnte auch überraschend verbessert werden. Anhand eines Grindometers kann die Dispergierbarkeit indirekt bestimmt werden. Die Grindometerbestimmung erfolgt in Anlehnung an die DIN EN ISO 1524. Er lässt sich zur Stippenbildung in den trockenen Lackfilmen in Beziehung setzen, so dass mit Hilfe des Grindometers die unerwünschten Stippen oder das Spritzkorn erkannt werden können. Außerdem lässt sich über diese Methode auch die Neigung einer Fällungskieselsäure zur Reagglomaration erkennen, die oft mit abnehmender Partikelgrößenverteilung zunimmt. Es sei hier auf Fig. 2 und 3 verwiesen.

Bei vielen gefällten Kieselsäuren mit d50-Werten von kleiner 5 $\mu$m neigen die Kieselsäurepartikel während der Lagerung zur Reagglomeration, was sich durch eine über die Zeit zunehmende Zahl an Stippen im Grindometerbild erkennen lässt. Gewöhnlich ist die Reagglomerationsneigung von unbehandelten Kieselsäuren höher als bei solchen, deren Oberfläche organisch belegt wurden. Dies kann bei Kieselsäuren mit hoher Reagglomeartionsneigung schon nach wenigen Tagen geschehen bzw. bei höherer Stabilität auch erst nach Wochen oder Monaten. Bei den erfindungsgemäßen Kieselsäuren konnte dies hingegen nicht beobachtet werden und bestätigt somit die sehr geringe Neigung zur Stippenbildung. An keiner Theorie gebunden, wird angenommen, dass die spezielle Morphologie und Porenverteilung der erfindungsgemäßen Kieselsäure sich nicht nur vorteilhaft auf die Dispergierbarkeit auswirken, sondern auch eine hohe Stabilität gegenüber Reagglomeration bedingen.

Stampfdichten verschiedener pulverförmiger oder grobkörniger granularer Materialien können nach DIN ISO 787-11 :1995 "Allgemeine Prüfverfahren für Pigmente und Füllstoffe - Teil 11: Bestimmung des Stampfvolumens und der Stampfdichte" bestimmt werden. Dabei wird die Fülldichte einer Schüttung nach dem Rütteln und Stampfen gemessen.

Für eine gleichmäßige Mattierungswirkung ist eine möglichst enge Teilchengrößenverteilung anzustreben. Die Teilchengrößenverteilung kann z. B. durch Messungen der d5, d50 und d95 -Werte in einfacher Weise bestimmt werden. Erfindungsgemäß unbehandelte oder wachsbeschichtete Fällungskieselsäuren weisen daher eine Teilchengrößenverteilung (Span), definiert über den Quotienten (d95 - d5) : d50, zwischen 1,3 und 1,7 auf.

Eine weitere Eigenschaft ist auch das Partikelgrößenverhältnis von $d_5$: $d_{50}$ : $d_{95}$

Bevorzugt beträgt die erfindungsgemäße Fällungskieselsäure einen $d_{50}$ von 3,5 - 4,5 $\mu$m.

Neben den unbehandelten, hydrophilen Kieselsäuren ist auch die Verwendung von mit Wachs belegten Kieselsäuren als Mattierungsmittel bekannt. Mit einer solchen Wachsbehandlung wird das Sedimentationsverhalten der Fällungskieselsäuren deutlich verbessert.

Ein weiterer Gegenstand der vorliegenden Erfindung sind daher wachsbeschichtete Fällungskieselsäuren, gekennzeichnet durch

| | |
|---|---|
| BET: | 150 m$^2$/g - 400 m$^2$/g, bevorzugt 200 m$^2$/g - 300 m$^2$/g, bestimmt nach ISO 9277 |
| DOA: | 220 ml/100 g - 400 ml/100 g, bevorzugt 250 ml/100g - 350 ml/100 g, bestimmt nach ISO 19246 |
| $d_{50}$: | 3,0 $\mu$m - 5,0 $\mu$m, bestimmt mit Laserbeugung (Coulter LS) nach ISO 13320, |
| Partikelgrößenverhältnis $d_5$ : $d_{50}$ : $d_{95}$: | >0,3 : 1 : <2, |

| | |
|---|---|
| Teilchengrößenverteilung | $d_{95}$ - $d_5$: zwischen 1,3 und 1,7. $d_{50}$ |
| Kohlenstoffgehalt: | 1,0 - 6,0 Gew.-%, bevorzugt 2,4 - 3,8 Gew.-%, bestimmt mit LECO nach ISO 3262-19 |

Zur Herstellung der erfindungsgemäßen Fällungskieselsäuren wurde beispielsweise wie folgt vorgegangen.

In einen Fällbehälter werden unter kontinuierlichem Rühren 13,5 m³ Wasser mit einer Temperatur von 50°C vorgelegt und dazu mit einer Geschwindigkeit von 14,85 m³/h handelsübliches Wasserglas hinzugegeben und nach 10 - 15 min die Zugabe beendet. Anschließend wird die Mischung auf eine Temperatur von 70°C erhitzt. Nun wird 96%-ige Schwefelsäure mit 0,27 m³/h innerhalb von 25 - 35 min hinzugegeben und fortwährend geschert und gerührt, wobei auf eine Temperatur von 85°C reguliert wird. Nach einer Standzeit zwischen 1,5 h - 3,5 h wird die Suspension innerhalb von 50 - 80 min mit Schwefelsäure angesäuert, bis der pH im Bereich 3,5 bis 3,9 liegt.

Die Abtrennung des Feststoffes aus der Suspension kann durch bekannte Filteroperationen wie z. B. eine Filterpresse (Membranfilterpresse) erfolgen. Der mit demineralisiertem Wasser gewaschene Filterkuchen sollte nun einer Trocknung unterzogen werden. Hierzu sind dem Fachmann vielerlei Trocknungsmethoden bekannt (Ullmann's Encyclopedia of industrial chemistry, 1992, 5th Edition, vol B1, Seite 7 - 25). Als vorteilhaft haben sich Trocknungen mittels Stromtrockner, Sprühtrockner, Etagentrockner, Bandtrockner, Drehrohrtrockner, Spin-Flash-Trockner oder Düsenturm erwiesen. Besonders bevorzugt erfolgt die Trocknung mittels Sprühtrockner oder Etagentrockner.

Für die Trocknung mittels Sprühtrockner wird der Filterkuchen unter Einwirkung von Scherkräften mit Wasser verflüssigt und auf eine Feststoffgehalt <15%, bevorzugt 7,0 -14,0%, besonders bevorzugt 9 - 12% eingestellt.

Die nach der Trocknung erhaltene Fällungskieselsäure kann entweder direkt klassierend vermahlen werden oder es ist auch möglich, die erfindungsgemäße Kieselsäure gleichzeitig während der klassierenden Vermahlung mit Wachs zu belegen, wobei sich die Belegung mit 2 - 15 Gew.-%, bevorzugt mit 5 - 10 Gew.-% und besonders bevorzugt mit 3 - 6 Gew.-% bewährt hat.

Neben der gennanten Wachsimprägnierung von Kieselsäuren sind noch andere Verfahren zu diesem Zweck bekannt und können z.B. in DE 1006 100, DE1592 865 oder EP 0922 691 nachgelesen werden. Hier werden Wachssuspensionen, ggf. unter Vermittlung eines Dispergators mit der Kieselsäuresuspension umgesetzt.

Um die gewünschte enge Kornverteilung der Fällungskieselsäure, sowie den gewünschten $d_{50}$ von 3,0 - 5,0 μm zu erhalten, wurde mit einer handelsüblichen Luftstrahlmühle, z.B. CGS 50 der Fa. Netzsch, eine klassierende Vermahlung durchgeführt.

Die erfindungsgemäßen unbehandelten oder mit Wachs beschichteten Fällungskieselsäuren können als Mattierungsmittel in Farben oder Lacken verwendet werden. Insbesondere können sie zur Herstellung von Dispersionen, Mahlgütern, Farben, Lacken oder Drucktinten, Inkjets, Anreibeharzen, Pigmentkonzentraten, Farbpräparationen, Pigmentpräparationen, Füllstoffpräparationen oder Beschichtungszusammensetzungen eingesetzt werden.

Die folgenden Beispiele sollen die Erfindung näher erläutern jedoch nicht den Schutzumfang, wie in den Patentansprüchen dargelegt, beschränken:

**Methoden**

Die **Stampfdichte** [g/l] wurde gemäß DIN ISO 787-11:1995 bestimmt.

Die spezifische **BET- Oberfläche [m²/g]** wurde gemäß DIN 9277:2014 durch Stickstoffadsorption nach dem Brunauer-Emmett-Teller-Verfahren.

Die Bestimmung der **DOA-Absorptionszahl** erfolgt in Anlehnung an ISO 19246 mittels eines Absorptometers, Fa. Brabender, das mit einem Drehmomentmess- und Verarbeitungssystem ausgestattet ist. Es kann zur Beurteilung des Flüssigkeitsaufnahmevermögens von Siliciumdioxid, Calciumsilicaten und Natriumaluminosilicaten verwendet werden. Der Wert der DOA-Absorptionszahl gibt einen Hinweis auf die Trägereigenschaft eines Füllstoffs.

Die Density Dy (Transparenz) der mattierten Klarlacke wurde mit einem eXact Densiometer der Fa. X-Rite, angelehnt an der DIN 55988, gemessen. Die mattierten Klarlacke der verschiedenen Lacksysteme wurden dabei auf schwarze PMMA-Platten aufgezogen, wobei für den Vergleich der verschiedenen Mattierungsmittel die Glanzgrade immer auf den jeweils betrachteten gleichen Glanzwert, gemessen bei 60°, eingestellt wurden. Die Transparenz wird dann über die diffuse Reflektion in einem Winkel von 45° über eine logarithmische Berechnung ermittelt. Die Parameter für die Messung wurden wie folgt vorgenommen:

| Parameter | Einstellungen |
|---|---|
| Measuring conditions | MO (no): no filter |
| Density Status | ISO Status E |

(fortgesetzt)

| Parameter | Einstellungen |
|---|---|
| Density White Base | Absolute |
| All Densities | CMYK |
| Density /Tone Value | Solid: CMYK |
| Density /Tone Value | Tint: Tone Value |
| Tone Value / Spot | SCTV (ISO20654) |
| Illuminant/Observer | D65/2°/10° |

Die **Grindometerbestimmung** erfolgt in Anlehnung an die DIN EN ISO 1524.

Mit einem schwarzen Melamin Einbrennlack und einem TIDAS Gerät für automatische Grindometeraufzüge zur Bestimmung der Dispergierfeinheit der Firma Labman wurde das Dispergierverhalten der verschiedenen Mattierungsmittel bewertet.

Zur Erzeugung der in Fig. 2 u 3 dargestellten Grindometerbilder wurde der schwarze Medium-Solid-Einbrennlack der Fa. AXALTA Coating Systems Austria GmbH mit der Bezeichnung DUPLEX D 1326 Rezepturnummer B11830875 mit der zugehörigen Verdünnung V 0003 (Fa. Axalta) eingesetzt.

Die entsprechende Menge der Fällungskieselsäure, die benötigt wird, um den Glanzgrad der trockenen Lackschicht auf 20 GU gemessen im 60°-Winkel einzustellen, wird dabei in 100g Lack mit einem Flügelrührer bei 2000 UpM 10 Minuten lang eingerührt. Der Lack wird dann flüssig auf den Grindometerblock mit einer maximalen Kanaltiefe von 70 $\mu$m aufgegeben und automatisch mit dem TIDAS-Gerät aufgerakelt und ausgewertet.

**Der Kohlenstoffgehalt** [Gew.-%] wurde bestimmt gemäß EN ISO3262-20:2000 (Chapter 8) durch Elementanalyse mit dem Kohlenstoffbestimmungssystem C632 (Hersteller: LECO). Die analysierte Probe wurde in einen Keramiktiegel gewogen, mit Verbrennungsadditiven versehen und in einem Induktionsofen unter Sauerstoffstrom erhitzt. Der vorhandene Kohlenstoff wird zu CO2 oxidiert. Die Menge an CO2-Gas wird durch Infrarotdetektoren (IR) quantifiziert. SiC, sofern vorhanden, wird nicht verbrannt und hat daher keinen Einfluss auf den Wert des Kohlenstoffgehalts.

Die Bestimmung des **Hg-Porenvolumens (d < 4 $\mu$m, d < 5 $\mu$m)** basiert auf der Quecksilber-Instrusion gemäß DIN 15901-1, wobei eine AutoPore V 9520 Vorrichtung der Firma Micomeritics, mit folgenden Geräte-Einstellungen: Kontaktwinkel von 140° und Druckbereich von 0,003 - 420 MPa verwendet und im Porendurchmesserbereich von 3,5 nm - 500 $\mu$m, nach der Vermahlung der Kieselsäure bestimmt wurde.

**Beispiele**

**1. Herstellung der erfindungsgemäßen Fällungskieselsäure K1 und K2**

In einen 20 m³ Fällbehälter wurden unter kontinuierlichem Rühren 13,5 m³ Wasser mit einer Temperatur von 50°C vorgelegt und dazu mit einer Geschwindigkeit von 14,85 m³/h handelsübliches Wasserglas (27,1% SiO2; 8,07% Na₂O; Dichte 1,335) hinzugegeben und nach 13 min die Zugabe beendet. Anschließend wurde die Mischung auf eine Temperatur von 70°C erhitzt. Nun wurde 96%-ige Schwefelsäure mit 0,27 m³/h innerhalb von 30 min hinzugegeben und fortwährend geschert und gerührt, wobei auf eine Temperatur von 85°C reguliert wurde. Nach einer Standzeit von 120 min wurde die Suspension erneut innerhalb von 60 min mit Schwefelsäure angesäuert, bis der pH-Wert im Bereich 3,5 bis 3,9 erreicht wurde. Zur Abtrennung des Feststoffes aus der Suspension wurde eine Membranfilterpresse verwendet und der mit demineralisiertem Wasser gewaschene Filterkuchen danach mit einen Sprühtrockner getrocknet. Für die Trocknung mittels Sprühtrockner wurde der Filterkuchen unter Einwirkung von Scherkräften mit Wasser verflüssigt und auf eine Feststoffgehalt von 10% eingestellt.

Die getrocknete, erfindungsgemäße Fällungskieselsäure wurde mit Hilfe einer CGS 50 Luftstrahlmühle der Fa. Netzsch entsprechend der gewünschten Kornverteilung klassierend vermahlen.

K1 ist eine unbehandelte erfindungsgemäße Kieselsäure mit den physikalisch-chemischen Kenndaten gemäß Tabellen A - C.

K2 wurde analog hergestellt, wobei die Oberflächenbelegung von K2 mit einem handelsüblichen PE-Wachs während der klassierenden Vermahlung in der Mühle erfolgte, wobei die Wachsmenge auf einen Kohlenstoffgehalt von 3,4%, gemessen mit einem LECO Elementaranalysator, eingestellt wurde. Die physikalisch-chemischen Kenndaten von K2 sind ebenfalls aus den Tabellen A - C ersichtlich.

Als Vergleichsbeispiele wurden die handelsüblichen Fällungskieselsäuren der Fa. Tosoh herangezogen.

**Tabelle A:**

| Kieselsäure | Hersteller | Oberfläche | BET [m²/g] | DOA-Absorption, [ml/100g] | Partikelgröße d5 % | Partikelgröße d50 % | Partikelgröße d95 % |
|---|---|---|---|---|---|---|---|
| K1 | erfindungsgemäß | unbehandelt | 266 | 324 | 1,8 | 4,3 | 7,6 |
| K2 | erfindungsgemäß | behandelt | 207 | 312 | 1,8 | 4,0 | 7,9 |
| VG1 | Tosoh | unbehandelt | 146 | 250 | 1,1 | 3,8 | 8,2 |
| VG2 | Tosoh | behandelt | 135 | 248 | 1,3 | 4,3 | 9,0 |

**Tabelle B:**

| Kieselsäure | Kohlenstoffgehalt [%] | Stampfdichte [g/L] | Schüttdichte [g/L] | Trocknungsverlust 2h/ 105°C [%] |
|---|---|---|---|---|
| K1 | - | 78 | 67 | 4,6 |
| K2 | 3,4 | 70 | 62 | 5,1 |
| VG1 | <0,05 | 76 | 64 | 4,9 |
| VG2 | 0,32 | 80 | 68 | 4,3 |

**Tabelle C:**

| Kieselsäure | Mittlerer Porendurchmesser (Volume) [μm] | Cum. Volume [ml/g] Bereich 0,1 μm - 3,0 μm | Cum. Volume [ml/g] Bereich 0,1 μm - 4,0 μm | Cum. Volume [ml/g] Bereich 0,1 μm - 5,0 μm |
|---|---|---|---|---|
| K1 | 2,7998 | 2,90 | 3,10 | 3,30 |
| K2 | 2,8353 | 2,70 | 2,90 | 3,00 |
| VG1 | 8,0332 | 2,20 | 2,35 | 2,55 |
| VG2 | 8,8739 | 2,20 | 2,40 | 2,50 |

Tabellen A - C zeigen die chemisch- physikalischen Kenndaten der erfindungsgemäßen Fällungskieselsäuren, sowie die der Vergleichskieselsäuren VG1 und VG2. K1 ist eine erfindungsgemäße unbehandelte Fällungskieselsäure. K2 ist eine erfindungsgemäße mit Wachs behandelte Fällungskieselsäure. Bei den Vergleichsbeispielen VG1 und VG2 handelt es sich um Fällungskieselsäuren der Firma Tosoh mit den Handelsnamen Nipsil E-1011 (lt. Datenblatt organisch nachbehandelt) (VG2) und Nipsil E-220A (VG1). Die mittlere Partikelgröße dieser im Handel erhältlichen Fällungskieselsäuren weisen einen ähnlichen $d_{50}$-Wert auf wie K1 und K2. Es ist bekannt, dass VG1 und VG2 als Mattierungsadditive eingesetzt werden.

Die erfindungsgemäßen Kieselsäuren K1 und K2 zeigten gegenüber VG1 und VG2 von Tosoh bei vergleichbarer Partikelgrößenverteilung eine deutlich höhere DOA-Zahl (Siehe Tabelle A).

Die spezielle Porosität der erfindungsgemäßen Kieselsäure K1 und K2 konnte mittels Quecksilberporosimetrie verdeutlicht werden. Die entsprechende Werte sind in Tabelle C dargestellt.

Die erfindungsgemäßen Kieselsäuren K1 und K2 zeigten mit ca. 2,8 μm einen sehr viel kleineren mittleren Porendurchmesser als das gefällte Nipsil E 1011 (VG2) mit 8,9 und das Nipsil E-220A (VG1) mit 8,0 μm. Trotzdem konnten K1 und K2 in einem Porenbereich von 0,1 - 3,0 μm, 0,1 - 4,0 μm und auch 0,1 - 5,0 μm mehr Quecksilber absorbieren. Die höhere Anzahl von durchschnittlich kleineren Poren bringt bei der Transparenz besonders bei Wasserlacksystemen einen entscheiden Vorteil.

**2. Herstellung von Lacksystemen**

Für die lacktechnischen Prüfungen wurden verschiedene Lacksysteme hergestellt.

**2.1 Lacksystem 1:** 2 K-PUR-Lack (DD-Lack)

Der lösemittelbasierte 2 K-PUR-Lack wurde gemäß den Angaben aus Tabelle 1 hergestellt.

**Tabelle 1: Lacksystem 1**

| Position | Lackrohstoffe | Hersteller | Gew. Teile (g) |
|---|---|---|---|
| 1 | Buthylacetat 98%ig | STAUB & CO.- SILBERMANN GmbH | 11,0 |
| 2 | Ethoxypropylacetat | Möller Chemie GmbH & Co. KG | 16,5 |
| 3 | Desmophen 800 | Covestro AG | 15,0 |
| 4 | Desmophen 1100 | Covestro AG | 20,0 |

(fortgesetzt)

| Position | Lackrohstoffe | Hersteller | Gew. Teile (g) |
|---|---|---|---|
| 5 | CAB 381-0,5, 10%ig in Buthylacetat 98% | Krahn Chemie GmbH | 3,0 |
| 6 | Mowilit, 50 %ig in Ethylacetat | Celanese Emulsion GmbH | 0,3 |
| 7 | Baysilone-Lackadditiv | OMG Borchers GmbH | 0,1 |
| 8 | Xylol | Merck | 34,1 |
| | | Summe | 100,0 |

Die einzelnen Lackrohstoffe wurden in der o.g. Reihenfolge schrittweise eingewogen und mit dem Labordissolver homogenisiert. Eine Homogenisierung musste jeweils nach den Positionen 4, 5, 6 und 7 erfolgen. Nach Pos. 8 wurde der Lack abschließend homogenisiert.

### 2.2 Lacksystem 2: 1 K-PU-Acrylat, wb (Klarlack)

Der wasserbasierte 1K-PU-Acrylat-Lack wurde gemäß den Angaben aus Tabelle 2 hergestellt.

**Tabelle 2: Lacksystem 2**

| Position | Lackrohstoffe | Hersteller | Gew. Teile |
|---|---|---|---|
| 1 | Dispersion Urethane 2012 | Michelman | 85,0 |
| 2 | Butylglykol | Evonik | 6,0 |
| 3 | Wasser | - | 6,0 |
| 4 | Tego Foamex 805 | Evonik | 0,2 |
| 5 | BYK 346 | BYK | 0,3 |
| 6 | Tego Viscoplus 3010 | Evonik | 0,5 |
| 7 | Wasser | - | 2,0 |
| | | Summe | 100 |
| Einstellung des pH-Wertes mit AMP 95 (2-Amino-2-methyl-1-propanol, 95% in Wasser, Fa. Carl Roth GmbH + Co. KG) | | | |

Es wurde eine Vormischung 1 aus den Positionen 2 und 3 mit einer pH-Einstellung unter Zugabe von AMP 95 auf 8,5 - 9,0 hergestellt. Eine Vormischung 2 aus den Positionen 6 und 7 wurde ebenfalls hergestellt. Nun wurde Position 1 vorgelegt und unter Rühren die Vormischung 1 hinzugegeben. Nach aufeinanderfolgender Zugabe von Position 4 und 5 wurde die Vormischung 2 hinzugegeben. Abschließend wurde der Klarlack 10 min bei 1500 UpM homogenisiert und in einen luftdichten Kanister gefüllt.

### 2.3 Lacksystem 3: 1K-Acrylat, wb (Klarlack)

Der wasserbasierte 1K-Acrylat-Lack wurde gemäß den Angaben aus Tabelle 3 hergestellt.

**Tabelle 3: Lacksystem 3**

| Position | Lackrohstoffe | Hersteller Rohstoffe | Gew. Teile |
|---|---|---|---|
| 1 | Alberdingk AC 3630 | Alberdingk | 80,0 |
| 2 | Tego Foamex 805 | Evonik | 0,2 |
| 3 | Tego Wet 270 | Evonik | 0,3 |
| 4 | Wasser | - | 13,0 |
| 5 | Butylglykol | Evonik | 6,5 |

(fortgesetzt)

| Position | Lackrohstoffe | Hersteller Rohstoffe | Gew. Teile |
|---|---|---|---|
|  |  | Summe | 100 |
| Einstellung des pH-Wertes mit AMP 95 (2-Amino-2-methyl-1-propanol, 95% in Wasser, Fa. Carl Roth GmbH + Co. KG) | | | |

Es wurde eine Vormischung aus den Positionen 4 und 5 mit einer pH-Einstellung unter Zugabe von AMP 95 auf 8,5 - 9,0 hergestellt. Position 1 wurde vorgelegt und unter Rühren die Vormischung hinzugegeben. Nach aufeinanderfolgender Zugabe von Position 2 und 3 wurde der Klarlack 10 min bei 1500 UpM homogenisiert und in einen luftdichten Kanister gefüllt.

**3 Applikation der Lacksysteme und Auswertung der Oberflächeneigenschaften**

**3.1 Einarbeitung der Kieselsäure in den Lacksystemen**

Lacksystem 1:

Entsprechend der Einwaage-Mengen aus Tabelle 3.1 wurde die Kieselsäure in 100 Gewichtsanteilen des Lacksystems 1 in einem 350ml PE-Becher eingebracht. Dabei wurde darauf geachtet, dass die Kieselsäure ordentlich eingearbeitet wurde und nicht am Rand des Bechers klebte. Anschließend wurde das nun mattierte Lacksystem 1 für 10 min bei 2000 UpM mit einem 4,2 cm Flügelrührer dispergiert.

Lacksystem 2:

Es wurden 95 Gewichtsanteile des Lacksystem 2 und 5 Gewichtsanteile Dowanol DPM (Dipropylenglycolmethylether, Dow Chemical) unter Rühren vermischt und 5 min mit einem Flügelrührer bei 1000 UpM gerührt.
In dieser Mischung wurden die entsprechenden Einwaage-Mengen der Kieselsäure gemäß Tabelle 3.2 eingearbeitet, mit dem Unterschied, dass bei der Zugabe der Kieselsäure bereits kontinuierlich mit dem Flüglerührer gerührt wurde.

Lacksystem 3:

Die Einarbeitung der Kieselsäure entsprechend der Einwaage-Mengen gemäß Tabelle 3.3 erfolgte analog zum Lacksystem 2.
VG1 und VG2 wurden analog in den jeweiligen Lacksystemen und Einwaage-Mengen aus den Tabellen 3.1 - 3.3 eingearbeitet.

**3.2 Applikation der mattierten Lacksysteme und Auswertung der Oberflächeneigenschaften**

Nach einer Entlüftungsphase von 30 min wurden die jeweiligen mattierten Lacksysteme mit einem Film Applicator Coatmaster 509 MC auf schwarzen PMMA-Platten aufgezogen. Dafür verwendete man einen Kastenrakel mit einer Spalthöhe von 200 $\mu$m. Die Aufzugsgeschwindigkeit war auf 25 mm/s eingestellt. Die beschichteten PMMA-Platten wurden unter klimatisierten Bedingungen bei 21° - 25°C und einer relativen Luftfeuchtigkeit von 40% - 60% über Nacht getrocknet. Der Glanzgrad bei 60° und die Transparenz der getrockneten mattierten Oberflächen wurden einen Tag nach der Applikation gemessen.

**Tab.3.1: Lacktechnische Ergebnisse des Lacksystems 1**

|  | Einwaage Mattierungsmittel [g/100g] | | | | Transparenz [Dy] | | | |
|---|---|---|---|---|---|---|---|---|
| Glanz 60° | K1 | K2 | VG1 | VG2 | K1 | K2 | VG1 | VG2 |
| 2 | 9,38 | 10,00 | 11,80 | 11,08 | 1,33 | 1,32 | 1,30 | 1,31 |
| 5 | 8,89 | 9,50 | 10,95 | 10,31 | 1,52 | 1,52 | 1,50 | 1,48 |
| 10 | 8,52 | 9,00 | 10,38 | 9,82 | 1,79 | 1,80 | 1,74 | 1,74 |
| 20 | 8,00 | 7,97 | 9,79 | 9,25 | 2,17 | 2,13 | 1,99 | 2,06 |

**Tab.3.2: Lacktechnische Ergebnisse des Lacksystems 2**

| Glanz 60° | Einwaage Mattierungsmittel [g/100g] | | | | Transparenz [Dy] | | | |
|---|---|---|---|---|---|---|---|---|
| | K1 | K2 | VG1 | VG2 | K1 | K2 | VG1 | VG2 |
| 2 | 5,10 | 5,70 | 9,15 | 6,70 | 1,38 | 1,37 | 1,35 | 1,39 |
| 5 | 3,30 | 3,70 | 6,15 | 4,55 | 1,60 | 1,59 | 1,52 | 1,55 |
| 10 | 2,12 | 2,41 | 4,28 | 3,38 | 1,80 | 1,80 | 1,62 | 1,71 |
| 20 | 1,10 | 1,20 | 2,69 | 2,24 | 2,10 | 2,08 | 1,91 | 1,94 |

**Tab.3.3: Lacktechnische Ergebnisse des Lacksystems 3**

| Glanz 60° | Einwaage Mattierungsmittel [g/100g] | | | | Transparenz [Dy] | | | |
|---|---|---|---|---|---|---|---|---|
| | K1 | K2 | VG1 | VG2 | K1 | K2 | VG1 | VG2 |
| 2 | 8,70 | 8,50 | 10,75 | 8,80 | 1,39 | 1,41 | 1,44 | 1,44 |
| 5 | 5,10 | 5,18 | 7,85 | 6,56 | 1,63 | 1,64 | 1,58 | 1,59 |
| 10 | 3,56 | 3,61 | 6,10 | 5,09 | 1,92 | 1,89 | 1,84 | 1,82 |
| 20 | 2,36 | 2,47 | 4,37 | 3,60 | 2,19 | 2,21 | 2,10 | 2,12 |

Die drei gezeigten Lacksysteme stehen stellvertretend für eine Vielzahl an gebräuchlichen Bindemittelsystemen, bei denen qualitativ hochwertige mattierte Oberflächen gewünscht werden. Hierbei spielen besonders Aspekte, wie Transparenz und Haptik bei den mattierten Beschichtungen eine wichtige Rolle.

Die erfindungsgemäßen Kieselsäuren K1 und K2 zeigten im Vergleich zu den herkömmlichen gefällten Kieselsäuren in allen drei Lacksystemen eine höhere Effizienz (Wirtschaftlichkeit) über den gesamten Glanzbereich von 20 Glanzpunkten, gemessen im 60°-Winkel, bis ins tiefmatte bei 2 Glanzwerten im 60° Winkel. Das bedeutet, dass zum Erreichen der in Tabelle 3.1 - 3.3 gezeigten Glanzgrade weniger Kieselsäure eingesetzt werden musste als bei den herkömmlichen Vergleichskieselsäuren VG1 und VG2. Der Vergleich der Effizienz macht dabei nur Sinn, wenn die miteinander verglichenen Kieselsäuren eine ähnliche Partikelgrößenverteilung [siehe Tabelle A (d5, d50 und d95)] aufweisen.

Die erfindungsgemäßen Kieselsäuren K1 und K2 zeigten gegenüber herkömmlichen Kieselsäuren höhere Transparenzwerte Dy im lösemittelbasierten Lacksystem 1 über den Glanzbereich von 20 bis 2 Glanzpunkten im 60°-Winkel gemessen (Tabelle 3.1). Auch in den beiden wässrigen Lacksystemen 2 und 3 (Tabelle 3.2 und 3.3) sind die Transparenzwerte im Glanzbereich 20 bis 5 Glanzeinheiten (60°-Winkel) durchweg höher. Dabei ist zu beachten, dass die Transparenzen der mattierten Klarlacksysteme 1, 2 und 3 nur bei gleichem Glanzgrad miteinander verglichen werden können. Ein Vergleich bei gleicher Dosierung des Mattierungsmittels ist unzulässig. Der gemessene Transparenzwert Dy ist ein logarithmischer Zahlenwert. Je höher also der Dy-Wert, desto transparenter ist der mattierte Klarlack.

So hat z. B. die gefällte unbehandelte gefällte Kieselsäure K1 im 1 K-Acrylat Lacksystem (Lacksystem 3) bei 20 Glanzeinheiten (60°-Winkel) einen Dy-Wert von 2,19, wobei die unbehandelte gefällte Wettbewerbskieselsäure Nipsil E-220A (VG1) nur einen Transparenzwert von 2,10 aufweist. Damit hat K1 eine etwa 23-%ig höhere Transparenz. Das geübte Auge kann schon messtechnisch ermittelte Werteunterschiede von 0,03 optisch wahrnehmen.

Somit wirkt sich diese spezielle Porosität der erfindungsgemäßen Kieselsäuren K1 und K2 positiv auf die Effizienz und Transparenz in verschiedenen Beschichtungssystemen aus.

4. Dispergierverhalten gemäß der Grindometerbestimmung

100 g Lack DUPLEX D 1326 wurden in einen 350 ml Polyethylenbecher eingewogen und 20 g Verdünnung V 0003 zugewogen. Anschließend wurde die in Tabelle 4 angegebene Menge Kieselsäuren eingewogen und sorgfältig mit einem Spatel in den verdünnten Prüflack eingearbeitet. Im Anschluss daran wurde mit einem Flügelrührer ø 43mm 10 min bei 2000 U/min dispergiert, wobei der PE-Becher zur Vermeidung von Verdunstungsverlusten abgedeckt wurde. Nach Einarbeitung der Kieselsäure wurde der mattierte Lack im verschlossenen Becher zum Entlüften 30 min stehengelassen.

Damit eine Vergleichbarkeit der verschiedenen Kieselsäuren gewährleistet ist, wurde der Schwarzlack Duplex D 1326 mit den in Tab. 4 aufgeführten Mattierungsmitteln jeweils auf einen Glanzgrad von 20 Glanzeinheiten ($\pm$ 0,1), gemessen im 60°-Winkel, eingestellt.

Der Einstellung des Glanzgrades wurde folgendermaßen geprüft:

Nach der erfolgten Entlüftung wurde der Lack mit einem motorischen Aufziehgerät (Erichsen Coatmaster 509 MC) bei einer Geschwindigkeit von 25 mm/s mit einem Vierkantrakel mit Spalthöhe 120 $\mu$m auf gereinigte Glasscheiben 130 x 90 x 3 mm appliziert. Dabei wird das Vierkantrakel mit einem Block aus VA-Stahl (Maße: 71 x 30 x 24 mm, Gewicht: ca. 420g) zur Erhöhung des Auflagegewichtes beschwert. Von jeder dispergierten Probe sind 2 Glasscheiben zu beschichten. Der applizierte Lack wurde im Rahmen der festgelegten Ablüftbedingungen abgelüftet:

| | |
|---|---|
| Temperatur: | 20°C bis 25°C |
| relative Luftfeuchte: | 40% bis 60% |
| Ablüftzeit: | 10 min bis 20 min |

Anschließend wurde der Lack in einem Umluft-Lacktrockenschrank 20 min bei 150 °C eingebrannt. Die Reflektometerwerte wurden nach dem Auskühlen der Glasscheiben (mind. 30 min) am BYK Haze Gloss gemessen. Der Reflektometerwert wurde aus dem Mittelwert der Doppelbestimmung gebildet.

Fig. 2 zeigt eine Grindometer-Aufnahme von K1 und K2

Fig. 3 zeigt eine Grindometer-Aufnahme von VG1 und VG2

Tab. 4: Auswertung Grindometerbilder

| | K1 [Fig 2] | K2 [Fig 2] | VG1 [Fig 3] | VG2 [Fig 3] |
|---|---|---|---|---|
| Einwaage Kieselsäure in Black Duplex D 1326 Prüflack [g] (20 Glanzeinheiten /60°) | 5,90 | 6,25 | 6,85 | 6,55 |
| D50 [$\mu$m] | 4,3 | 4,0 | 3,8 | 4,3 |
| Grindometerwert [$\mu$m] | 15 | 15 | 18 | 18 |
| Anzahl Stippen | 0 | 0 | 5 | 4 |
| Stippen bis [$\mu$m] | - | - | 63 | 57 |

Die in Fig. 2 und 3 gezeigten Grindometer-Aufnahmen zeigen für die erfindungsgemäßen Kieselsäuren K1 und K2 einen um 3 $\mu$m niedrigeren Wert als bei den Vergleichskieselsäuren VG1 und VG2. Dies geht auch einher mit den niedrigeren d95%-Werten aus Tabelle A, da der Grindometerwert maßgeblich durch den gröberen Anteil des Kornkollektivs bestimmt wird. Wie bei den oben gezeigten Klarlacksystemen 1, 2 und 3 zeigten die erfindungsgemäßen Kieselsäuren auch im schwarz pigmentierten Duplex D 1326 Prüflack eine höhere Effizienz, da weniger Mattierungsmittel eingewogen werden musste, um einen Glanzgrad von 20, gemessen bei 60°-Winkel, einzustellen. Es fällt auch auf, dass K1 und K2 in Fig.2 einen deutlich engeren Übergangsbereich sowie keinerlei Stippen aufweisen. Bei vielen gefällten Kieselsäuren mit d50-Werten von kleiner 5 $\mu$m neigen die Kieselsäurepartikel während der Lagerung zur Reagglomeration, was sich durch eine über die Zeit zunehmende Zahl an Stippen im Grindometerbild erkennen lässt. Gewöhnlich ist die Reagglomerationsneigung von unbehandelten Kieselsäuren höher als bei solchen, deren Oberfläche organisch belegt wurden. Dies kann bei Kieselsäuren mit hoher Reagglomeartionsneigung schon nach wenigen Tagen geschehen bzw. bei höherer Stabilität auch erst nach Wochen oder Monaten. Bei den erfindungsgemäßen Kieselsäuren K1 und K2 konnte dies hingegen nicht beobachtet werden und bestätigt somit die sehr geringe Neigung zur Stippenbildung. Es wird angenommen, dass die spezielle Morphologie und Porenverteilung der Kieselsäuren K1 und K2 sich nicht nur vorteilhaft auf die Dispergierbarkeit auswirken, sondern auch eine hohe Stabilität gegenüber Reagglomeration bedingen.

**Patentansprüche**

**1.** Fällungskieselsäure, **gekennzeichnet durch**

| | |
|---|---|
| BET: | 150 m$^2$/g - 400 m$^2$/g, bevorzugt 200 m$^2$/g - 300 m$^2$/g, bestimmt nach ISO 9277 |

(fortgesetzt)

| | |
|---|---|
| DOA: | bestimmt 220 ml/100 g - 400 ml/100 g, bevorzugt 250 ml/100g - 350 ml/100 g, nach ISO 19246 |
| $d_{50}$: | bestimmt durch Laserbeugung an einer Coulter LS nach ISO 3,0 $\mu$m - 5,0 $\mu$m, 13320, |
| Partikelgrößenverhältnis $d_5$: $d_{50}$ : $d_{95}$: | >0,3 : 1 : <2, |
| Teilchengrößenverteilung $\dfrac{d_{95} - d_5}{d_{50}}$: | zwischen 1,3 und 1,7. |

2. Fällungskieselsäure gemäß Anspruch 1, **dadurch gekennzeichnet, dass** der Median Porendurchmesser, kleiner als 7,0 $\mu$m, bevorzugt kleiner als 5,0 $\mu$m und besonders bevorzugt kleiner als 3,0 $\mu$m ist, gemessen mit einem Autopore IV 9520 nach ISO 15901-1, mit folgenden Geräte-Einstellungen: Kontaktwinkel von 140° und Druckbereich von 0,003 - 420 MPa, berechnet im Porendurchmesserbereich von 3,5 nm - 500 $\mu$m.

3. Fällungskieselsäure nach einem der Ansprüche 1 - 2, **dadurch gekennzeichnet, dass** der Porenvolumen größer als 2,40 ml/g (d = 0,1 $\mu$m - d = 4,0 $\mu$m) - 3,10 ml/g (d = 0,1 $\mu$m - d = 4,0 $\mu$m), bestimmt mittels des Hg-Porosimeters, aufweist.

4. Fällungskieselsäure nach einem der Ansprüche 1 - 3, **dadurch gekennzeichnet, dass** der Porenvolumen größer als 2,50 ml/g (d = 0,1 $\mu$m - d = 5,0 $\mu$m) - 3,30 ml/g (d = 0,1 $\mu$m - d = 5,0 $\mu$m), bestimmt mittels des Hg-Porosimeters, aufweist.

5. Fällungskieselsäure nach einem der Ansprüche 1 - 4, **dadurch gekennzeichnet, dass** der $d_{50}$ 3,5 - 4,5 $\mu$m beträgt.

6. Verwendung der Fällungskieselsäure nach Anspruch 1 - 5 als Mattierungsmittel zur Herstellung von Dispersionen, Mahlgütern, Farben, Lacken oder Drucktinten, Inkjets, Anreibeharzen, Pigmentkonzentraten, Farbpräparationen, Pigmentpräparationen, Füllstoffpräparationen oder Beschichtungszusammensetzungen.

7. Wachsbeschichtete Fällungskieselsäure, **gekennzeichnet durch**

| | |
|---|---|
| BET: | 150 m$^2$/g - 400 m$^2$/g, bevorzugt 200 m$^2$/g - 300 m$^2$/g, gemessen nach ISO 9277 |
| DOA: | 220 ml/100 g - 400 ml/100 g, bevorzugt 250 ml/100g - 350 ml/100 g, gemessen nach ISO 19246 |
| $d_{50}$: | 3,0 $\mu$m - 5,0 $\mu$m, gemessen mit Laserbeugung (Coulter LS) nach ISO 13320, |
| Partikelgrößenverhältnis $d_5$: $d_{50}$ : $d_{95}$: | >0,3 : 1 : <2, |
| Teilchengrößenverteilung $\dfrac{d_{95} - d_5}{d_{50}}$: | zwischen 1,3 und 1,7. |
| Kohlenstoffgehalt: | 1,0 - 6,0 Gew.-%, bevorzugt 2,4 - 3,8 Gew.-%, gemessen mit LECO nach ISO 3262-19 |

8. Verwendung der Fällungskieselsäure nach Anspruch 7 als Mattierungsmittel zur Herstellung von Dispersionen, Mahlgütern, Farben, Lacken oder Drucktinten, Inkjets, Anreibeharzen, Pigmentkonzentraten, Farbpräparationen, Pigmentpräparationen, Füllstoffpräparationen oder Beschichtungszusammensetzungen.

Fig. 1

Fig. 2

K1
d50 = 4,3 μm
15 μm

K2
d50 = 4,0 μm
15 μm

Fig. 3

**VG1**
$d_{50}$ = 3.8 μm
18 μm

**VG2**
$d_{50}$ = 4,3 μm
18 μm

Fig. 4

Europäisches
Patentamt

European
Patent Office

Office européen
des brevets

**EUROPÄISCHER RECHERCHENBERICHT**

**Nummer der Anmeldung**

EP 24 17 3249

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 342 876 A (ABE KIYOSHI [JP] ET AL) 30. August 1994 (1994-08-30) * Abbildungen 2,3 * * Tabellen 1-7 * * Spalte 2, Zeile 31 - Spalte 15 * * Beispiele 1-32 * ----- | 1-8 | INV. C01B33/193 C08K3/36 C09D7/62 C09C1/30 C08K9/08 C09D7/61 |
| X | US 6 468 493 B1 (CHEVALLIER YVONICK [FR] ET AL) 22. Oktober 2002 (2002-10-22) | 1-5,7 | |
| Y | * Spalte 1, Zeile 41 - Spalte 8 * * Beispiele 1-6 * * Tabellen 1-4 * ----- | 6,8 | |
| X | US 5 234 673 A (MCGILL PATRICK D [US] ET AL) 10. August 1993 (1993-08-10) * Abbildung 2 * * Zeile 18, Absatz 2 - Absatz 6 * * Beispiele 1-11 * * Tabellen 1-22 * ----- | 1-8 | |
| Y | WO 2021/069256 A1 (RHODIA OPERATIONS [FR]) 15. April 2021 (2021-04-15) * Absätze [0008] - [0014] * * Beispiele 1-2 * * Tabelle 2 * ----- | 6,8 | **RECHERCHIERTE SACHGEBIETE (IPC)** C01B C08K C09G C09C C09D |

Der vorliegende Recherchenbericht wurde für alle Patentansprüche erstellt

| Recherchenort | Abschlußdatum der Recherche | Prüfer |
|---|---|---|
| Den Haag | 29. August 2024 | Marino, Emanuela |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 17 3249

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-08-2024

| Im Recherchenbericht angeführtes Patentdokument | Datum der Veröffentlichung | Mitglied(er) der Patentfamilie | Datum der Veröffentlichung |
|---|---|---|---|
| US 5342876 A | 30-08-1994 | BE 1007982 A4 | 05-12-1995 |
| | | CA 2087911 A1 | 25-07-1993 |
| | | CH 688376 A5 | 29-08-1997 |
| | | DE 4301945 A1 | 05-08-1993 |
| | | FR 2687658 A1 | 27-08-1993 |
| | | GB 2263903 A | 11-08-1993 |
| | | KR 930016344 A | 26-08-1993 |
| | | NL 9300139 A | 16-08-1993 |
| | | US 5342876 A | 30-08-1994 |
| US 6468493 B1 | 22-10-2002 | AT E244683 T1 | 15-07-2003 |
| | | AU 743439 B2 | 24-01-2002 |
| | | BR 9804926 A | 08-09-1999 |
| | | CA 2261618 A1 | 03-12-1998 |
| | | CN 1230936 A | 06-10-1999 |
| | | DE 69816233 T2 | 03-06-2004 |
| | | EP 0917519 A1 | 26-05-1999 |
| | | ES 2198055 T3 | 16-01-2004 |
| | | FR 2763581 A1 | 27-11-1998 |
| | | ID 21812 A | 29-07-1999 |
| | | JP 3325029 B2 | 17-09-2002 |
| | | JP H11513976 A | 30-11-1999 |
| | | KR 20000029476 A | 25-05-2000 |
| | | PL 331327 A1 | 05-07-1999 |
| | | PT 917519 E | 28-11-2003 |
| | | RU 2170212 C2 | 10-07-2001 |
| | | TR 199900182 T1 | 21-07-1999 |
| | | US 6468493 B1 | 22-10-2002 |
| | | US 2003118500 A1 | 26-06-2003 |
| | | US 2005135985 A1 | 23-06-2005 |
| | | US 2007181036 A1 | 09-08-2007 |
| | | US 2011287257 A1 | 24-11-2011 |
| | | US 2015010757 A1 | 08-01-2015 |
| | | WO 9854090 A1 | 03-12-1998 |
| US 5234673 A | 10-08-1993 | US 5234673 A | 10-08-1993 |
| | | US 5419888 A | 30-05-1995 |
| WO 2021069256 A1 | 15-04-2021 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1006100
- DE 1592865
- EP 0922691 A

**In der Beschreibung aufgeführte Nicht-Patentliteratur**

- Ullmann's Encyclopedia of industrial chemistry. 1992, vol. B1, 7-25